# EUROPÄISCHE PATENTSCHRIFT

(11) **EP 2 368 096 B1**
(45) Veröffentlichungstag und Bekanntmachung des Hinweises auf die Patenterteilung: **01.12.2021**
(21) Anmeldenummer: 09774891.7
(22) Anmeldetag: 11.12.2009
(51) Int. Cl.: G01N 9/00, G01N 11/16, G01F 23/296

(54) **VORRICHTUNG ZUR BESTIMMUNG UND/ODER ÜBERWACHUNG EINER PROZESSGRÖßE**
DEVICE FOR DETERMINING AND/OR MONITORING A PROCESS VARIABLE
DISPOSITIF PERMETTANT DE DÉTERMINER ET/OU DE CONTRÔLER UN PARAMÈTRE DE PROCESSUS

(30) Priorität: 19.12.2008 DE 102008054945
(43) Veröffentlichungstag der Anmeldung: 28.09.2011
(73) Patentinhaber: Endress+Hauser SE+Co. KG, 79689 Maulburg (DE)
(72) Erfinder: LOPATIN, Sergej, 79540 Lörrach (DE); PFEIFFER, Helmut, 79585 Steinen (DE); URBAN, Martin, 79669 Zell i. W. (DE)
(74) Vertreter: Andres, Angelika Maria
(86) Internationale Anmeldenummer: PCT/EP2009/066908
(87) Internationale Veröffentlichungsnummer: WO 2010/069866

(56) Entgegenhaltungen:
- EP-A1- 0 444 173
- WO-A1-02/079733
- DE-A- 387 847 3T2
- DE-A1- 3 643 349
- DE-A1- 3 810 669
- DE-A1-102005 053 331
- DE-C1- 4 233 185
- GB-A- 1 554 726
- US-A- 3 139 544
- US-A- 4 526 480
- US-A- 4 540 981
- CHERIAN A: "APPARATUS FOR SENSING THE LEVEL OF PARTICULATE MATTER OR LIQUID RELATIVE TO A PRESELECTED LEVEL IN A CONTAINER" XEROX DISCLOSURE JOURNAL, XEROX CORPORATION. STAMFORD, CONN, US, Bd. 19, Nr. 5, 1. September 1994 (1994-09-01), Seiten 375-377, XP000469504

## Beschreibung

Die Erfindung bezieht sich auf eine Vorrichtung zur Bestimmung und/oder Überwachung mindestens einer Prozessgröße eines Mediums, mit mindestens einer mechanisch schwingfähigen Einheit, welche mindestens teilweise mit dem Medium in Kontakt kommt, mit mindestens einer Wandlereinheit, welche die mechanisch schwingfähige Einheit zu mechanischen Schwingungen anregt und welche von der mechanisch schwingfähigen Einheit mechanische Schwingungen empfängt, und mit mindestens einem Gehäuse. Weiterhin bezieht sich die Erfindung auf ein Begrenzungselement für eine Vorrichtung zur Bestimmung und/oder Überwachung mindestens einer Prozessgröße eines Mediums, wobei die Vorrichtung mindestens eine mechanisch schwingfähige Einheit aufweist, welche mindestens teilweise mit dem Medium in Kontakt kommt, und wobei die Vorrichtung mindestens ein Gehäuse aufweist. Bei der Prozessgröße handelt es sich beispielsweise um den Füllstand, die Dichte oder die Viskosität des Mediums, welches beispielsweise eine Flüssigkeit, ein Gas oder ein Schüttgut ist.

Im Stand der Technik sind zur Bestimmung des Füllstands und weiterer Prozessgrößen eines Mediums so genannte Schwinggabeln (z.B. EP 0 444 173 B1), Einstäbe (z.B. WO 2004/094964 A1) oder auch Membranschwinger bekannt. Ausgenutzt wird bei den jeweiligen Messungen, dass die Kenngrößen der mechanischen Schwingungen (Schwingungsamplitude, Resonanzfrequenz, Phasengang über Frequenz) der schwingfähigen Einheit vom Kontakt mit dem Medium und auch von dessen Eigenschaften abhängen. So nimmt beispielsweise die Frequenz oder die Amplitude der Schwingungen ab, wenn insbesondere ein flüssiges Medium die schwingfähige Einheit erreicht und zumindest teilweise bedeckt. Das flüssige Medium wirkt auf den schwingenden Körper des Sensors - d.h. z.B. auf die Schwinggabel bzw. den Einstab bzw. die Membran ― einerseits als mitbewegte Masse, weshalb die Schwingfrequenz sinkt, und andererseits als mechanischer Dämpfer, weshalb die Schwingungsamplitude abnimmt. Daher lässt sich aus der Abnahme der Schwingungsfrequenz bzw. der Amplitude darauf schließen, dass das Medium einen von der Ausgestaltung und der Position der Anbringung der Vorrichtung abhängigen Füllstand erreicht hat. Weiterhin ist die Schwingungsfrequenz auch beispielsweise von der Viskosität des Mediums abhängig (siehe z.B. EP 1 325 301). Derartige Messgeräte werden meist mittels eines elektromechanischen Wandlers mit der Resonanzfrequenz zu Schwingungen angeregt.

Häufig werden die zuvor beschriebenen Sensoren als Grenzstandschalter verwendet. Handelt es sich bei der Prozessgröße beispielsweise um den Füllstand, so erzeugt der Sensor ein Signal, welches anzeigt, dass der Füllstand, der durch die Ausgestaltung des Sensors und dessen Anbringungsort vorgegeben ist, erreicht oder unterschritten wurde.

Beim Einsatz von Schwinggabeln in Flüssigkeiten mit niedriger Dichte (z.B. kleiner als 0,5 g/cm³ wie Flüssiggase) ist der Frequenzunterschied zwischen der Schwingfrequenz in Luft und der Schwingfrequenz im eingetauchten Zustand üblicherweise zu gering für eine gesicherte Auswertung. Die Temperatur und der Prozessdruck beeinflussen insbesondere die Schwingfrequenz in ähnlichen Größenordnungen wie eine Frequenzänderung in Folge einer Änderung der Mediumsdichte. Mit anderen Worten: Die Dichteempfindlichkeit des Sensors kann in solchen Fällen zu gering sein im Vergleich zu Störeinflüssen wie Temperatur oder Dichte.

Daher besteht die Aufgabe darin, insbesondere für die Anwendung mit sehr leichten Flüssigkeiten die Dichteempfindlichkeit des schwingfähigen Sensors zu erhöhen.

Die Erfindung löst die Aufgabe zum einen durch eine Vorrichtung zur Bestimmung und/oder Überwachung mindestens einer Prozessgröße eines Mediums gemäß dem Patentanspruch 1. Weiterhin löst die Erfindung die Aufgabe durch ein Begrenzungselement gemäß dem Patentanspruch 7.

Mit dem erfindungsgemäßen Begrenzungselement kann somit beispielsweise eine Vorrichtung gemäß dem Stand der Technik zu einer erfindungsgemäßen Vorrichtung erweitert werden.

Die erfindungsgemäße Vorrichtung ist dabei derartig ausgestaltet, dass mindestens ein Begrenzungselement vorgesehen ist, und dass das Begrenzungselement derartig ausgestaltet und angeordnet ist, dass das Begrenzungselement zumindest teilweise die mechanisch schwingfähige Einheit umgibt und dass die daraus resultierende Reduzierung des die mechanisch schwingfähige Einheit umgebenden Volumens die Messempfindlichkeit der Vorrichtung erhöht. Bei dem Begrenzungselement handelt es sich dabei sowohl um ein fest angebrachtes Begrenzungselement oder um ein ggf. nur temporär fixierbares Element, welches beispielsweise auf ein bereits gefertigtes und dem Stand der Technik entsprechendes Messgerät aufbringbar ist. Bei der Vorrichtung handelt es sich um eines der eingangs im Stand der Technik beschriebenen Messgeräte, beispielsweise eine Schwinggabel, einen Einstab, oder einen Membranschwinger.

Das Volumen um die Schwingelemente wird durch das Begrenzungselement verringert. Hierdurch erhöht sich die Frequenzänderung (= Änderung der Frequenz infolge der Änderung der Prozessgröße) durch zusätzliche, im Spalt wirkende, Interaktionskräfte zwischen der Wand und den Schwingelementen. Erfindungsgemäß wird die Messempfindlichkeit erhöht, indem das Volumen um die mechanisch schwingfähige Einheit bewusst auf ein wohldefiniertes Maß beschränkt oder zumindest reduziert wird. Anders ausgedrückt wird die mitbewegte Masse durch die Begrenzung des Volumens um die mechanisch schwingfähige Einheit herum erhöht und dadurch das Resonanzverhalten der schwingfähigen Einheit beeinflusst.

Aus der DE 3878473 T3 ist ein Wandler für Flüssigkeiten mit einer gabelförmigen schwingfähigen Einheit bekannt, welcher fakultativ eine massive oder aus einem Drahtgewebe aufgebaute zylindrische Schutzhülse aufweist, welche die schwingfähige Einheit umgibt. Die dort beschriebene Schutzhülse dient im Gegensatz zu dem erfindungsgemäßen Begrenzungselement jedoch lediglich dem Schutz der schwingfähigen Einheit vor eventuell in der Flüssigkeit vorhandenen Partikeln, welche diese beschädigen könnten. Die Empfindlichkeit des Sensors wird dort auf andere Art und Weise gelöst, beispielsweise durch eine Wiedereintrittsoberfläche in den Gabelzinken.

Die erfindungsgemäße Vorrichtung sieht vor, dass die mechanisch schwingfähige Einheit mindestens zwei Gabelzinken aufweist. Die schwingfähige Einheit ist somit eine Schwinggabel, bei welcher zwei Gabelzinken auf einer Membran angebracht sind, über welcher vorzugsweise die Schwingungsübertragung zur Wandlereinheit, welche beispielsweise mindestens ein piezoelektrisches Element aufweist, stattfindet.

Die erfindungsgemäße Vorrichtung beinhaltet, dass die mechanisch schwingfähige Einheit mindestens eine Membran aufweist. In dieser Ausgestaltung ist die mechanisch schwingfähige Einheit beispielsweise ein reiner Membranschwinger, d.h. die mechanisch schwingfähige Einheit besteht nur aus der Membran, oder die Membran ist mit weiteren Elementen, z.B. den beiden zuvor genannten Gabelzinken, mechanisch gekoppelt.

Eine Ausgestaltung der erfindungsgemäßen Vorrichtung sieht vor, dass die mechanisch schwingfähige Einheit Paddel als Gabelzinken aufweist.

Zudem umgibt der Innenraum des topfähnlichen Elements in dieser Ausgestaltung die Paddel. Somit wird von dem topfähnlichen Element zumindest der Bereich der schwingfähigen Einheit umfasst, welcher durch die Paddelform eine besonders vergrößerte Wirkfläche aufweist.

Die erfindungsgemäße Vorrichtung beinhaltet, dass das Begrenzungselement mindestens eine Platte aufweist, und dass die Platte zwischen den mindestens zwei Gabelzinken der mechanisch schwingfähigen Einheit angeordnet ist. Diese Platte limitiert somit in einer Richtung das Medium, welches in Kontakt mit der schwingfähigen Einheit kommt. Je nach Ausgestaltung ergibt sich eine Art von Trennwand.

Die erfindungsgemäße Vorrichtung sieht vor, dass das Begrenzungselement mindestens ein topfähnliches Element mit einem zumindest auf einer Seite offenen Innenraum aufweist, und dass der Innenraum des topfähnlichen Elements zumindest einen Teil der mechanisch schwingfähigen Einheit umgibt. In dieser Ausgestaltung wird somit die schwingfähige Einheit vom Begrenzungselement teilweise umfasst, so dass zumindest in gewissen Bereichen die Fluidmenge, welche die schwingfähige Einheit umgibt, durch das Innenvolumen des topfähnlichen Elements bestimmt wird.

Eine Ausgestaltung der erfindungsgemäßen Vorrichtung sieht vor, dass das topfähnliche Element mindestens eine durchgehende Aussparung aufweist.

Die durchgehende Aussparung dient dem Fluss des Mediums, so dass das Medium in den Innenraum des topfähnlichen Elements eindringen kann und ggf. durch neues Medium ersetzt wird. Es können auch mehrere Aussparungen vorhanden sein, welche den Zu- bzw. Abfluss ermöglichen. Die Aussparung bzw. Aussparungen können Löcher oder Schlitze sein, die sich an der Seite oder im Boden des topfähnlichen Elements befinden.

Die erfindungsgemäße Vorrichtung beinhaltet, dass das Begrenzungselement derartig ausgestaltet und mit dem Gehäuse verbunden ist, dass die mechanisch schwingfähige Einheit im Wesentlichen frei von einem direkten mechanischen Kontakt mit dem Begrenzungselement ist.

Eine Ausgestaltung der erfindungsgemäßen Vorrichtung sieht vor, dass das Begrenzungselement zumindest teilweise an einer Seitenberandung der Membran angebracht ist. Da das Begrenzungselement die eigentlichen mechanischen Schwingungen im Wesentlichen nicht beeinflussen soll, ist hier das Begrenzungselement außerhalb des Schwingungsaktiven Bereichs der Membran angebracht.

Eine Ausgestaltung der erfindungsgemäßen Vorrichtung beinhaltet, dass die Platte des Begrenzungselements derartig ausgestaltet und dass das Begrenzungselement derartig mit der Seitenberandung der Membran verbunden ist, dass die Membran frei einem direkten mechanischen Kontakt mit der Platte ist.

Durch das erfindungsgemäße Begrenzungselement wird der Bereich um die mechanisch schwingfähige Einheit begrenzt. Weiterhin gelten auch hier die weiter oben ausgeführten Erklärungen und entsprechenden Ausgestaltungen. Durch das Begrenzungselement ergibt sich somit ggf. ein wohldefiniertes Messvolumen um die mechanisch schwingfähige Einheit herum. Das Begrenzungselement ist dabei beispielsweise derartig ausgestaltet, dass es auf bereits bestehende Messvorrichtungen aufbringbar ist oder dass es bei der Fertigung einer Messvorrichtung eingebaut wird.

Eine Ausgestaltung des erfindungsgemäßen Begrenzungselements beinhaltet, dass das Begrenzungselement derartig ausgestaltet und mit dem Gehäuse verbindbar ist, dass die mechanisch schwingfähige Einheit im Wesentlichen frei von einem direkten mechanischen Kontakt mit dem Begrenzungselement ist.

Eine Ausgestaltung des erfindungsgemäßen Begrenzungselements sieht vor, dass das Begrenzungselement zumindest teilweise an einer Seitenberandung der Membran anbringbar ist.

Eine Ausgestaltung des erfindungsgemäßen Begrenzungselements beinhaltet, dass die Platte des Begrenzungselements derartig ausgestaltet und dass das Begrenzungselement derartig mit der Seitenberandung der Membran verbindbar ist, dass die Membran frei einem direkten mechanischen Kontakt mit der Platte ist.

Die Erfindung wird anhand der nachfolgenden Zeichnungen näher erläutert.

Es zeigt:
Fig. 1: eine schematische Darstellung der Anwendung eines Grenzstandsschalters,
Fig. 2: eine räumliche Darstellung einer nicht erfindungsgemäßen Schwinggabel,
Fign. 3 a) und b): zwei Schnitte durch die Schwinggabel der Fig. 2,
Fign. 4 a), b) und c): drei Schnitte durch eine Ausgestaltung einer erfindungsgemäßen Schwinggabel, und
Fign. 5 a), b) und c): drei Schnitte durch eine weitere Ausgestaltung einer erfindungsgemäßen Schwinggabel.

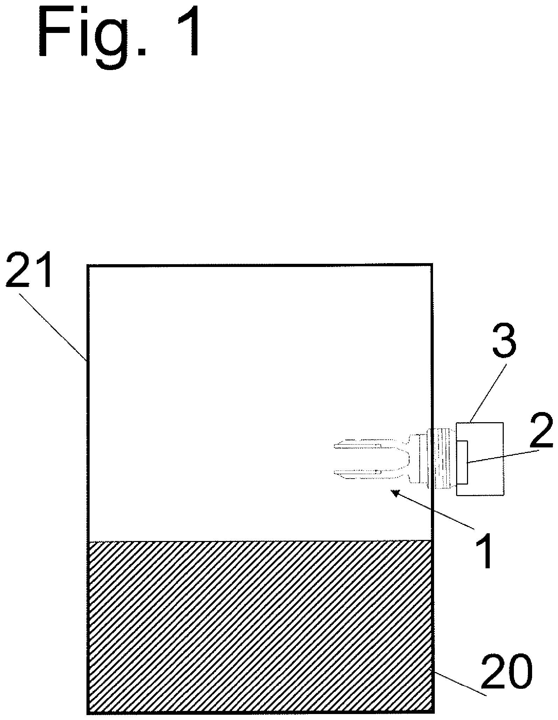

In der Fig. 1 ist das Beispiel gezeigt, dass ein Sensor als Grenzstandschalter verwendet wird. Die mechanisch schwingfähige Einheit 1 ist dabei eine sog. Schwinggabel, d.h. zwei Gabelzinken sind an einer Membran befestigt. Die Gabelzinken reichen dabei in den Innenraum des Behälters 21 hinein, innerhalb dessen sich das Medium 20 befindet, welches beispielsweise eine Flüssigkeit ist. Es sei darauf hingewiesen, dass sich die Erfindung neben der dargestellten Schwinggabel auch auf Messgeräte mit einem Einstab oder Membranschwinger als mechanisch schwingfähige Einheit bezieht. Derartige Messgeräte werden von der Anmelderin in einer großen Vielfalt angeboten und vertrieben. Erreicht das Medium 20 die mechanisch schwingfähige Einheit 1, so beeinflusst es die Schwingungen der mechanisch schwingfähigen Einheit 1, was sich beispielsweise in einer Veränderung der Frequenz und/oder der Amplitude zeigt. Die Wechselwirkung zwischen Medium 20 und mechanisch schwingfähiger Einheit 1 erlaubt dabei beispielsweise auch die Bestimmung bzw. Überwachung solcher Prozessgrößen wie Dichte oder Viskosität, wobei bei diesen Messungen der Grad der Bedeckung durch das Medium bekannt sein sollte.

Außerhalb des Behälters 21 befindet sich hier auch das Gehäuse 3, in welchem sich die Wandeleinheit 2 und beispielsweise auch die Elektronik befindet, welche für die Rückkopplung und für die Verarbeitung der Schwingungen sorgt. Die Wandlereinheit 2 regt dabei ausgehend von einem Anregungssignal die mechanisch schwingfähige Einheit 1 zu Schwingungen an und empfängt von der mechanisch schwingfähigen Einheit 1 die mechanischen Schwingungen, welches sie in ein Empfangssignal umwandelt.

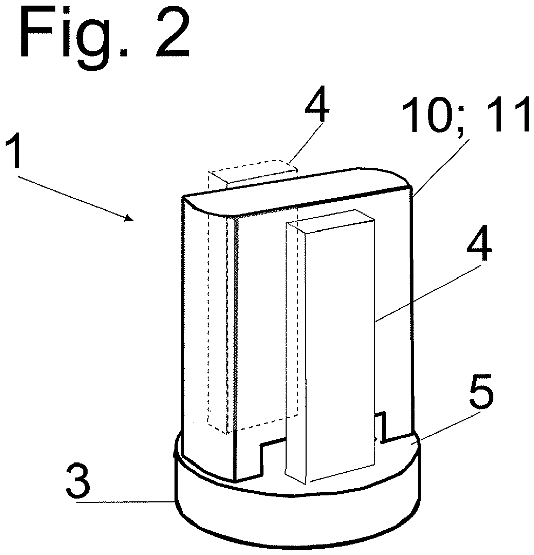

In der Fig. 2 ist ein Teil eines nicht erfindungsgemäßen Messgerätes dargestellt.

Zur Erhöhung der Messgenauigkeit, z.B. für die Bestimmung und/oder Überwachung der Dichte des Mediums ist hier ein Begrenzungselement 10 vorgesehen, welches als Platte 11 zwischen den beiden Gabelzinken 4 angeordnet ist. Die beiden Gabelzinken 4 sind auf der Membran 5 befestigt, so dass eine direkte mechanische Kopplung zwischen den Zinken 4 und der Membran 5 bestehen. Die Platte 11 jedoch ist vorzugsweise derartig mit dem Gehäuse 3 bzw. mit der Aussenberandung der Membran 5 verbunden, dass im Wesentlichen keine mechanische Kopplung zwischen Platte 11 und Membran 5 besteht. Dafür weist hier auch die Platte 11 einen Ausschnitt auf, durch welchen die Platte 11 oberhalb der Innenflächen der Membran 5 befindlich ist.

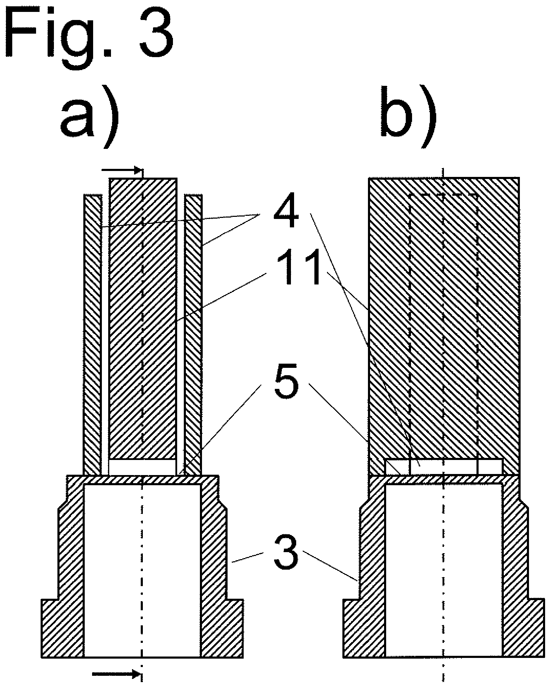

In den Fign. 3 a) und b) sind zwei Schnitte durch die Variante der Fig. 2 dargestellt. Zu sehen ist in der Fig. 3 a), wie die Platte 11 als Trennung zwischen den beiden Gabelzinken 4 angeordnet ist. Die Fig. 3 b) ist der Schnitt senkrecht zur gestrichelt gezeichneten Achse in der Fig. 3 a). Zu erkennen ist, dass die Platte 11 im Wesentlichen nur mit dem Rand der Membran 5 mechanischen Kontakt hat. Durch die Aussparung der Platte 11 oberhalb der Innenfläche der Membran 5 wird der mechanische Kontakt verhindert.

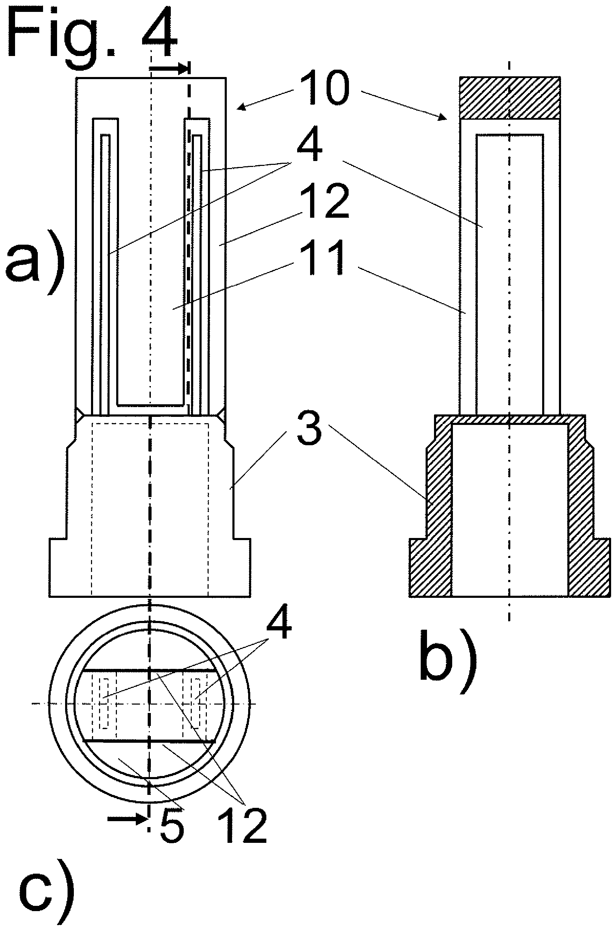

In den Fign. 4 a), b) und c) ist eine Erweiterung dargestellt, indem oberhalb der Platte 11 ein topfähnliches Element 12 vorgesehen ist. Dieses topfähnliche Element 12 bildet mit der Platte 11 das Begrenzungselement 10 und begrenzt zusätzlich zur Platte 11 das Medium in Umgebung der Gabelzinken. Die Gabelzinken 4 werden somit quasi vom Begrenzungselement 10 eingefasst. Damit das Medium in den Innenraum gelangen und somit auch in Kontakt mit den Gabelzinken 4 kommen kann, ist das Begrenzungselement 10 seitlich geöffnet. Unterhalb des seitlichen Schnitts a) ist ein weiterer Schnitt c) dargestellt, in welchem zu erkennen ist, dass das topfähnliche Element 12 hier im Wesentlichen zylindrisch ausgestaltet ist. Dabei weißt der Rundzylinder, den das topfähnliche Element 12 bildet, dort jeweils eine Abflachung des Radius' auf, wo das Element 12 den Breitseiten der Gabelzinken 4 zugewandt ist.

Um die Empfindlichkeit der Messung deutlich zu erhöhen, ist das topfähnliche Element 12 in einem geringen Abstand d zu den Gabelzinken 4 angeordnet, wobei der Abstand d so gewählt ist, dass einerseits die Gabelzinken 4 von dem topfähnlichen Element 12 nicht an der Ausführung ihrer Schwingungen gehindert werden und andererseits die von den Gabelzinken 4 mitbewegte Masse merklich erhöht wird. Um dies zu erreichen ist der Abstand zwischen den Gabelzinken 4 und dem topfähnlichen Element 12 bevorzugt kleiner als der halbe Abstand zwischen den beiden Gabelzinken 4.

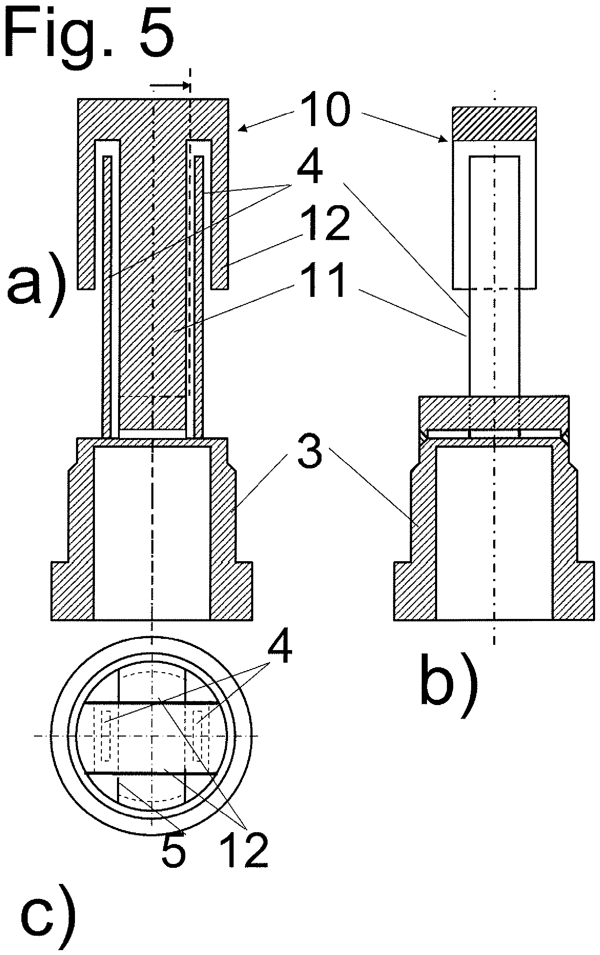

In den Fign. 5 a), b) und c) sind drei weitere Schnitte durch eine zusätzliche Variante dargestellt. Das topfähnliche Element 12 befindet sich hier im Wesentlichen nur auf Höhe der von der Membran 5 abgewandten Enden der Gabelzinken, an welchen sich zumeist Paddel befinden. In der Fig. 5 b) ist zu erkennen, dass das topfähnliche Element 12 die Zinken und damit auch insbesondere an den Enden der Zinken angebrachte - aber hier nicht dargestellte - Paddel, welche die vergrößerte Wechselwirkungsfläche erzeugen, umfasst. In einer weiteren Ausgestaltung ist das topfähnliche Element 12 der einzige Bestandteil des Begrenzungselements. In einer weiteren Ausgestaltung wird nicht das obere Ende der Gabelzinken vom topfähnlichen Element 12 umfasst, sondern das der Membran zugewandte Ende. Für diese Ausgestaltung besteht das Begrenzungselement quasi nur aus einem Hohlzylinder. Handelt es sich beispielsweise um einen Membranschwinger, so besteht das Begrenzungselement in einer Ausgestaltung aus einer Art erhöhten Deckel, welcher Aussparungen für das Strömen des Mediums aufweist.

### Bezugszeichenliste

- 1: Mechanisch schwingfähige Einheit
- 2: Wandlereinheit
- 3: Gehäuse
- 4: Gabelzinken
- 5: Membran
- 6: Paddel
- 10: Begrenzungselement
- 11: Platte
- 12: Topfähnliches Element
- 20: Medium
- 21: Behälter

## Patentansprüche

1. Vorrichtung zur Bestimmung und/oder Überwachung mindestens einer Prozessgröße eines Mediums (20),
mit einer mechanisch schwingfähigen Einheit (1) mit einer Membran (5) und zwei Gabelzinken (4), wobei die zwei Gabelzinken (4) auf der Membran (5) angebracht sind, wobei die schwingfähige Einheit (1) mindestens teilweise mit dem Medium (20) in Kontakt kommt,
mit mindestens einer Wandlereinheit (2), welche die mechanisch schwingfähige Einheit (1) zu mechanischen Schwingungen anregt und welche von der mechanisch schwingfähigen Einheit (1) mechanische Schwingungen empfängt, und
mit mindestens einem Gehäuse (3), in welchem sich die Wandlereinheit (2) befindet, **dadurch gekennzeichnet,**
**dass** die Vorrichtung ein relativ zur mechanisch schwingfähigen Einheit (1) angeordnetes Begrenzungselement (10) umfasst, das aufweist:
- mindestens eine Platte (11), die zwischen den zwei Gabelzinken (4) der mechanisch schwingfähigen Einheit (1) angeordnet ist, und
- ein topfähnliches Element (12) mit einem zumindest auf einer Seite offenen Innenraum, wobei der Innenraum des topfähnlichen Elements (12) zumindest einen Teil der mechanisch schwingfähigen Einheit umgibt,
wobei das Begrenzungselement (10) derartig ausgestaltet und
relativ zur mechanisch schwingfähigen Einheit (1) angeordnet ist, dass es das dem Medium (20) zur Verfügung stehende Volumen um die Gabelzinken (4) der mechanisch schwingfähigen Einheit (1) herum auf ein wohldefiniertes Maß beschränkt oder zumindest reduziert und die Messempfindlichkeit der Vorrichtung erhöht, indem das topfähnliche Element (12) in einem geringen Abstand (d) zu den Gabelzinken (4) angeordnet ist, wobei der Abstand (d) so gewählt ist, dass einerseits die Gabelzinken (4) von dem topfähnlichen Element (12) nicht an der Ausführung ihrer Schwingungen gehindert werden und andererseits die von den Gabelzinken (4) mitbewegte Masse merklich erhöht wird.

2. Vorrichtung nach Anspruch 1,
**dadurch gekennzeichnet,**
**dass** das Begrenzungselement (10) mit dem Gehäuse (3) derart verbunden ist, dass die mechanisch schwingfähige Einheit (1) im Wesentlichen frei von einem direkten mechanischen Kontakt mit dem Begrenzungselement (10) ist.

3. Vorrichtung nach einem der Ansprüche 1-2,
**dadurch gekennzeichnet,**
**dass** das Begrenzungselement (10) zumindest teilweise an einer Seitenberandung der Membran (5) angebracht ist.

4. Vorrichtung nach einem der Ansprüche 1, 2 oder 3,
**dadurch gekennzeichnet,**
**dass** die beiden Gabelzinken als Paddel ausgestaltet sind, und dass das topfähnliche Element zumindest den Bereich der mechanisch schwingfähigen Einheit umgibt, der durch die Paddelform eine vergrößerte Wirkfläche aufweist.

5. Vorrichtung nach Anspruch 4,
**dadurch gekennzeichnet,**
**dass** das topfähnliche Element (12) im Wesentlichen zylindrisch ausgestaltet ist und jeweils eine Abflachung des Radius' in dem Bereich aufweist, wo das topfähnliche Element (12) den Breitseiten der Gabelzinken (4) zugewandt ist.

6. Vorrichtung nach einem oder mehreren der vorhergehenden Ansprüche,
**dadurch gekennzeichnet,**
**dass** das topfähnliche Element (12) relativ zu den Gabelzinken (4) so angeordnet ist,
**dass** der Abstand (d) zu den Gabelzinken bevorzugt kleiner als der halbe Abstand zwischen den beiden Gabelzinken (4) ist.

7. Begrenzungselement (10) ausgeführt für eine Vorrichtung zur Bestimmung und/oder
Überwachung mindestens einer Prozessgröße eines Mediums (20),
wobei die Vorrichtung eine mechanisch schwingfähige Einheit (1) mit einer Membran (5) und zwei Gabelzinken (4) aufweist, wobei die zwei Gabelzinken (4) auf der Membran (5) angebracht sind, wobei die mechanisch schwingfähige Einheit (1) mindestens teilweise mit dem Medium (20) in Kontakt kommt, und
wobei die Vorrichtung mindestens ein Gehäuse (3) aufweist, in welchem sich die Wandlereinheit (2) befindet,
**dadurch gekennzeichnet,**
**dass** das Begrenzungselement (10) aufweist:
- mindestens eine Platte (11), die zwischen den zwei Gabelzinken (4) der mechanisch schwingfähigen Einheit (1) angeordnet ist, und
- ein topfähnliches Element (12) mit einem zumindest auf einer Seite offenen Innenraum, wobei der Innenraum des topfähnlichen Elements (12) zumindest einen Teil der mechanisch schwingfähigen Einheit umgibt,
wobei das Begrenzungselement (10) derartig ausgestaltet und relativ zur mechanisch schwingfähigen Einheit (1) anordenbar ist, dass es das dem Medium (20) zur Verfügung stehende Volumen um die Gabelzinken (4) der schwingfähigen Einheit (1) herum auf ein wohldefiniertes Maß beschränkt oder zumindest reduziert und daraus resultierend die Messempfindlichkeit der Vorrichtung erhöht, indem das topfähnliche Element (12) in einem geringen Abstand (d) zu den Gabelzinken (4) angeordnet ist, wobei der Abstand (d) so gewählt ist, dass einerseits die Gabelzinken (4) von dem topfähnlichen Element (12) nicht an der Ausführung ihrer Schwingungen gehindert werden und andererseits die von den Gabelzinken (4) mitbewegte Masse merklich erhöht wird.

## Claims

1. Apparatus designed to determine and/or à monitor at least one process variable of a medium (20), said apparatus comprising
a unit (1) capable of vibrating mechanically with a membrane (5) and two fork tines (4), wherein the two fork tines (4) are mounted on the membrane (5), wherein the unit capable of vibrating mechanically (1) comes at least partially into contact with the medium (20),
at least a transducer unit (2), which excites the unit capable of vibrating mechanically (1) to produce mechanical vibrations and which receives mechanical vibrations from the unit capable of vibrating mechanically (1),
and at least a housing (3) in which the transducer unit (2) is located,
**characterized**
**in that** the apparatus comprises a limitation element (10) which is arranged in relation to the unit capable of vibrating mechanically (1), said apparatus comprising
- at least a plate (11), which is arranged between the two fork tines (4) of the unit capable of vibrating mechanically (1), and
- a pot-like element (12) which has an interior space which is open at least on one side, wherein the interior space of the pot-like element (12) surrounds at least a part of the unit capable of vibrating mechanically,
wherein the limitation element (10) is designed and arranged in relation to the unit capable of vibrating mechanically (1) in such a way that it limits or at least reduces the volume available to the medium (20) around the fork tines (4) of the unit capable of vibrating mechanically (1) to a well-defined amount and increases the measurement sensitivity of the apparatus,
**in that** the pot-like element (12) is arranged at a short distance (d) to the fork tines (4), wherein the distance (d) is selected in such a way that, on the one hand, the fork tines (4) are not prevented from performing their vibrations by the pot-like element (12) and, on the other hand, the mass displaced by the fork tines (4) is notably increased.

2. Apparatus as claimed in Claim 1, **characterized**
**in that** the limitation element (10) is connected to the housing (3) in such a way that the unit capable of vibrating mechanically (1) is essentially free from a direct mechanical contact with the limitation element (10).

3. Apparatus as claimed in one of the Claims 1 to 2, **characterized in that** the limitation element (10) is at least partially fixed to a side edge of the membrane (5).

4. Apparatus as claimed in one of the Claims 1, 2 or 3, **characterized in that** the two fork tines are designed as paddles, and **in that** the pot-like element surrounds at least the part of the unit capable of vibrating mechanically that has a larger effective surface due to the shape of the paddle.

5. Apparatus as claimed in Claim 4, **characterized**
**in that** the pot-like element (12) is essentially cylindrical and has a flattening of the radius in the area where the pot-like element (12) faces towards the wide sides of the fork tines (4).

6. Apparatus as claimed in one of more of the previous claims, **characterized in that** the pot-like element (12) is arranged in relation to the fork tines (4) in such a way that the distance (d) to the fork tines is preferably less than half the distance between the two fork tines (4).

7. Limitation element (10) designed for an apparatus designed to determine and/or monitor at least a process variable of a medium (20),
wherein the apparatus has a unit capable of vibrating mechanically (1) with a membrane (5) and two fork tines (4), wherein the two fork tines (4) are mounted on the membrane (5), wherein the unit capable of vibrating mechanically (1) at least partially comes into contact with the medium (20), and
wherein the apparatus has at least a housing (3) in which the transducer unit (2) is located,
**characterized in that** the limitation element (10) comprises:
- at least a plate (11), which is arranged between the two fork tines (4) of the unit capable of vibrating mechanically (1), and
- a pot-like element (12) with an interior space that is open at least on one side, wherein the interior space of the pot-like element (12) surrounds at least a part of the unit capable of vibrating mechanically,
wherein the limitation element (10) is designed and arranged in relation to the unit capable of vibrating mechanically (1) in such a way that it limits or at least reduces the volume available to the medium (20) around the fork tines (4) of the unit capable of vibrating mechanically (1) to a well-defined amount and increases the measurement sensitivity of the apparatus as a result,
**in that** the pot-like element (12) is arranged at a short distance (d) to the fork tines (4), wherein the distance (d) is selected in such a way that, on the one hand, the fork tines (4) are not prevented from performing their vibrations by the pot-like element (12) and, on the other hand, the mass displaced by the fork tines (4) is notably increased.

## Revendications

1. Dispositif destiné à la détermination et/ou à la surveillance d'au moins une grandeur process d'un produit (20), lequel dispositif comprend
une unité (1) apte à vibrer mécaniquement avec une membrane (5) et deux bras de fourche (4), les deux bras de fourche (4) étant montés sur la membrane (5), l'unité apte à vibrer (1) venant au moins partiellement en contact avec le produit (20),
au moins une unité de transducteur (2), laquelle excite l'unité apte à vibrer mécaniquement (1) en vibrations mécaniques et reçoit des vibrations mécaniques de l'unité apte à vibrer mécaniquement (1),
et au moins un boîtier (3) dans lequel l'unité de transducteur (2) est située, **caractérisé**
**en ce que** le dispositif comprend un élément de limitation (10) disposé par rapport à l'unité apte à vibrer mécaniquement (1), lequel dispositif comprend
- au moins une plaque (11), laquelle est disposée entre les deux bras de fourche (4) de l'unité apte à vibrer mécaniquement (1), et
- un élément en forme de pot (12) présentant un espace intérieur ouvert sur au moins un côté, l'espace intérieur de l'élément en forme de pot (12) entourant au moins une partie de l'unité apte à vibrer mécaniquement,
l'élément de limitation (10) étant conçu et disposé par rapport à l'unité apte à vibrer mécaniquement (1) de telle sorte qu'il limite ou au moins réduit le volume disponible pour le produit (20) autour des bras de fourche (4) de l'unité apte à vibrer mécaniquement (1) dans une mesure bien définie et augmente la sensibilité de mesure du dispositif,
**en ce que** l'élément en forme de pot (12) est disposé à une faible distance (d) des bras de fourche (4), la distance (d) étant choisie de telle sorte que, d'une part, les bras de fourche (4) ne sont pas empêchés d'effectuer leurs vibrations par l'élément en forme de pot (12) et, d'autre part, la masse déplacée par les bras de fourche (4) est sensiblement augmentée.

2. Dispositif selon la revendication 1, **caractérisé**
**en ce que** l'élément de limitation (10) est relié au boîtier (3) de telle manière que l'unité apte à vibrer mécaniquement (1) est pour l'essentiel exempte de contact mécanique direct avec l'élément de limitation (10).

3. Dispositif selon l'une des revendications 1 à 2, **caractérisé**
**en ce que** l'élément de limitation (10) est au moins partiellement fixé à un bord latéral de la membrane (5).

4. Dispositif selon l'une des revendications 1, 2 ou 3, **caractérisé en ce que** les deux bras de fourche sont conçus comme des palettes, et **en ce que** l'élément en forme de pot entoure au moins la zone de l'unité apte à vibrer mécaniquement, qui présente une surface effective élargie en raison de la forme de palette.

5. Dispositif selon la revendication 4, **caractérisé**
**en ce que** l'élément en forme de pot (12) est pour l'essentiel cylindrique et présente un rayon aplati dans la zone où l'élément en forme de pot (12) fait face aux côtés larges des bras de fourche (4).

6. Dispositif selon l'une ou plusieurs des revendications précédentes, **caractérisé en ce que** l'élément en forme de pot (12) est disposé par rapport aux bras de fourche (4) de telle manière que la distance (d) aux bras de fourche est de préférence inférieure à la moitié de la distance entre les deux bras de fourche (4).

7. Élément de limitation (10) conçu pour un dispositif destiné à la détermination et/ou à la surveillance d'au moins une grandeur process d'un produit (20),
le dispositif présentant une unité apte à vibrer mécaniquement (1) avec une membrane (5) et deux bras de fourche (4), les deux bras de fourche (4) étant montés sur la membrane (5), l'unité apte à vibrer mécaniquement (1) venant au moins partiellement en contact avec le produit (20), et
le dispositif présentant au moins un boîtier (3) dans lequel se trouve l'unité de transducteur (2),
**caractérisé**
**en ce que** l'élément de limitation (10) comprend :
- au moins une plaque (11), laquelle est disposée entre les deux bras de fourche (4) de l'unité apte à vibrer mécaniquement (1), et
- un élément en forme de pot (12) avec un espace intérieur ouvert sur au moins un côté, l'espace intérieur de l'élément en forme de pot (12) entourant au moins une partie de l'unité apte à vibrer mécaniquement,
l'élément de limitation (10) étant conçu et pouvant être disposé par rapport à l'unité apte à vibrer mécaniquement (1) de telle sorte qu'il limite ou au moins réduit le volume disponible pour le produit (20) autour des bras de fourche (4) de l'unité apte à vibrer mécaniquement (1) dans une mesure bien définie et augmente ainsi la sensibilité de mesure du dispositif,
**en ce que** l'élément en forme de pot (12) est disposé à une faible distance (d) des bras de fourche (4), la distance (d) étant choisie de telle sorte que, d'une part, les bras de fourche (4) ne sont pas empêchés d'effectuer leurs vibrations par l'élément en forme de pot (12) et, d'autre part, la masse déplacée par les bras de fourche (4) est sensiblement augmentée.
